(19) **Europäisches Patentamt**
**European Patent Office**
**Office européen des brevets**

(11) **EP 3 696 578 A1**

(12) **EUROPÄISCHE PATENTANMELDUNG**

(43) Veröffentlichungstag:
**19.08.2020  Patentblatt 2020/34**

(51) Int Cl.:
***G02B 1/11*** *(2015.01)*    ***B29D 11/00*** *(2006.01)*
***G02C 7/06*** *(2006.01)*

(21) Anmeldenummer: **19157212.2**

(22) Anmeldetag: **14.02.2019**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder:
• **Carl Zeiss AG**
  **73447 Oberkochen (DE)**

• **Carl Zeiss Vision International GmbH**
  **73430 Aalen (DE)**

(72) Erfinder:
• **Prof. Dr. Totzeck, Michael**
  **73525 Schwäbisch Gmünd (DE)**
• **Dr. Haidl, Markus**
  **73431 Aalen (DE)**

(74) Vertreter: **Rau, Schneck & Hübner**
**Patentanwälte Rechtsanwälte PartGmbB**
**Königstraße 2**
**90402 Nürnberg (DE)**

(54) **REFRAKTIVES OPTISCHES BAUELEMENT UND DARAUS HERGESTELLTES BRILLENGLAS, VERFAHREN ZUR HERSTELLUNG EINES REFRAKTIVEN OPTISCHEN BAUELEMENTS, COMPUTERPROGRAMMPRODUKT, AUF EINEM DATENTRÄGER ABGESPEICHERTE BAUDATEN EINES BRILLENGLASES, GERÄT ZUR ADDITIVEN HERSTELLUNG EINES GRUNDKÖRPERS UND BRILLENGLAS**

(57)    Ein refraktives optisches Bauelement (1) weist einen Grundkörper (10) auf mit einem entlang wenigstens einer ersten Richtung modelierten Brechzahlverlauf mit einer Anzahl vom maximalen Bereich von 2 bis 1000, einem maximalen mittleren Abstand zwischen benachbarten Maxima von höchstens 1 mm und einem Brechzahlhub $\Delta n > 0,001$, wobei der Brechzahlverlauf eine dreidimensionale Fouriertransformierte $\tilde{n}(f_x, f_y, f_z)$ aufweist mit einem Modulationsvektor $f = (f_x, f_y, f_z)$, für den gilt:

$$\left| \frac{4 \, x \, 10^6}{m} \frac{f_z}{|f|^2} - 1 \right| \leq u_{max}$$

$$\left| \frac{4 \, x \, 10^6}{m} \frac{f_z \cos \vartheta_{max} + \sqrt{f_x^2 + f_y^2} \sin \vartheta_{max}}{|f|^2} - 1 \right| \leq u_{max}$$

mit $u_{max} \leq 0,5$ und $\vartheta_{max} \leq 90°$.

**(Forts. nächste Seite)**

Fig. 1

**Beschreibung**

Die Erfindung betrifft ein refraktives optisches Bauelement. Außerdem betrifft die Erfindung ein daraus hergestelltes Brillenglas. Weiter betrifft die Erfindung ein Verfahren zur Herstellung eines refraktiven optischen Elements und ein verfahrensgemäß hergestelltes Brillenglas. Schließlich betrifft die Erfindung ein Computerprogrammprodukt zur Durchführung eines Verfahrens zur Herstellung eines refraktiven optischen Elements, ein Gerät zur additiven Herstellung eines Grundkörpers und ein Brillenglas.

Es ist möglich, optische Komponenten durch additive Fertigungsverfahren herzustellen. Exemplarisch sei hierfür auf die WO 2015/092 016 A1, die US 2005/004 6957 A1 und die WO 2016/188 930 A1 verwiesen. Hierbei kann es herstellungsbedingt zu unerwünschten Effekten, beispielsweise Streueffekten, kommen, welche sich negativ auf die optischen Eigenschaften der Komponenten auswirken.

Aus der EP 0 341 998 A1 ist eine Multifokallinse bekannt. Aus der WO 2008/051 578 A2 und der WO 2008/051 592 A2 sind mehrschichtige Linsen bekannt. Aus der DE 10 2009 004 377 B4, der DE 10 2009 004 379 B4 und der DE 10 2009 004 380 B4 sind Verfahren zum Herstellen eines Brillenglases mittels eines additiven Fertigungsverfahrens bekannt. Aus diesen Patenten ist insbesondere die lagenweise Herstellung eines Brillenglases bekannt.

Es ist eine Aufgabe der Erfindung, ein refraktives optisches Element zu verbessern.

Es ist insbesondere eine Aufgabe der Erfindung, ein refraktives optisches Bauelement mit verbesserten Streueigenschaften auszubilden. Aufgabe der Erfindung ist insbesondere, das refraktive optische Bauelement derart auszubilden, dass die Entstehung von Streulicht verringert, insbesondere verhindert wird.

Diese Aufgabe wird durch ein refraktives optisches Bauelement gemäß Anspruch 1 gelöst.

Der Kern der Erfindung besteht darin, ein refraktives optisches Bauelement mit einem Grundkörper auszubilden, wobei der Grundkörper einen entlang wenigstens einer ersten Richtung modulierten Brechzahlverlauf aufweist mit einer Anzahl von Extrema im Bereich 2 bis 1000 einem maximalen mittleren Abstand zwischen zwei benachbarten Maxima und/oder zwischen benachbarten Minima von höchstens 1 mm und einem Brechzahlhub von mindestens 0,001, wobei der Brechzahlverlauf im Grundkörper eine dreidimensionale Fouriertransformierte aufweist, welche durch einen Modulationsvektor f = ($f_x$, $f_y$, $f_z$) charakterisiert ist, für den gilt:

$$\left| \frac{4 \times 10^6}{m} \frac{f_z}{|f|^2} - 1 \right| \leq u_{max}$$

und

$$\left| \frac{4 \times 10^6}{m} \frac{f_z \cos \vartheta_{max} + \sqrt{f_x^2 + f_y^2} \sin \vartheta_{max}}{|f|^2} - 1 \right| \leq u_{max}$$

mit $u_{max} \leq 0{,}5$, insbesondere $u_{max} \leq 0{,}3$, insbesondere $u_{max} \leq 0{,}2$, insbesondere $u_{max} \leq 0{,}1$, insbesondere $u_{max} \leq 0{,}05$, insbesondere $u_{max} \leq 0{,}03$, insbesondere $u_{max} \leq 0{,}02$, und insbesondere $u_{max} \leq 0{,}01$.

$u_{max}$ ist ein dimensionsloser Parameter, mit welchem sich charakterisieren lässt, unter welchen Bedingungen Streulicht, insbesondere für einen Nutzer relevantes Streulicht, im Grundkörper erzeugt wird. Je kleiner $u_{max}$ ist, umso weniger Streulicht wird erzeugt.

Hierbei bezeichnen x, y und z die Richtungen eines kartesischen Koordinatensystems. Die z-Richtung bezeichnet insbesondere eine Hauptrichtung des optischen Bauelements.

$\vartheta_{max}$ gibt den maximalen Einfallswinkel an, für welchen das optische Bauelement streuoptimiert sein soll. $\vartheta_{max}$ gibt insbesondere den maximalen Einfallswinkel an, für welchen das optische Bauelement in einem vorgegebenen Rahmen im Wesentlichen streuungsfrei ist.

$\vartheta_{max}$ beträgt höchstens 90°, insbesondere höchstens 60°, insbesondere höchstens 45°, insbesondere höchstens 30°, insbesondere höchstens 20°, insbesondere höchstens 15° und insbesondere höchstens 10°.

Ein refraktives optisches Bauelement ist ein optisches Bauelement, welches zu einer Änderung der Ausbreitungsrichtung eines auf das Bauelement einfallenden Lichtstrahls führen kann. Es kann insbesondere zur Bündelung oder Zerstreuung eines parallel einfallenden Strahlenbündels führen.

Die oben genannten Bedingungen für den Modulationsvektor f gelten insbesondere für eine Wellenlänge λ von 500 nm. Allgemein gilt:

$$\left| \frac{2}{\lambda} \frac{f_z}{|f|^2} - 1 \right| \leq u_{max}$$

und

$$\left| \frac{2}{\lambda} \frac{f_z \cos \vartheta_{max} + \sqrt{f_x^2 + f_y^2} \sin \vartheta_{max}}{|f|^2} - 1 \right| \leq u_{max}$$

λ gibt hierbei eine Wellenlänge an, für welche das optische Bauelement verwendet werden soll.

Unter Brechzahlhub sei die Differenz zwischen der maximalen Brechzahl und der minimalen Brechzahl im Grundkörper verstanden.

Das refraktive optische Bauelement ist insbesondere zur Verwendung im sichtbaren Bereich, insbesondere im Bereich einer Wellenlänge λ von 400 nm bis 800 nm, vorgesehen. Dies ist jedoch nicht einschränkend zu verstehen. Es kann sich auch um refraktive optische Bauelemente zur Verwendung im Infrarotbereich oder zur Verwendung im UV-Bereich handeln. Bei einer vorgesehenen Verwendung des refraktiven optischen Bauelements im nicht-sichtbaren Wellenlängenbereich können die Randbedingungen für den Modulationsvektor f anhand der allgemeinen Formeln an die gewünschte Wellenlänge angepasst werden.

Erfindungsgemäß wurde erkannt, dass ein Grundkörper mit einem derart modulierten Brechzahlverlauf zu besonders geringen Streuverlusten führt. Mit einem derart modulierten Brechzahlverlauf lassen sich Streuverluste um mehr als 50 %, insbesondere mehr als 60 % und insbesondere mehr als 70 % reduzieren. Er weist mit anderen Worten besonders vorteilhafte optische Eigenschaften auf.

Bei der Fouriertransformierten handelt es sich insbesondere um eine gefensterte Fouriertransformierte. Die Länge des Fensters beträgt insbesondere höchstens 10 mm, insbesondere höchstens 5 mm, insbesondere höchstens 3 mm, insbesondere höchstens 2 mm. Sie beträgt insbesondere mindestens 1 mm. Je kürzer die Länge des Fensters, desto größer ist die Flexibilität für die Herstellung des refraktiven optischen Bauelements mit Bereichen unterschiedlicher optischer Eigenschaften.

Die minimale Länge des Fensters ist insbesondere so groß wie der minimal zu erwartende Durchmesser der Pupille eines Brillenträgers.

Der maximale mittlere Abstand zwischen benachbarten Maxima und/oder zwischen benachbarten Minima des Brechzahlverlaufs beträgt insbesondere höchstens 100 μm, insbesondere höchstens 10 μm. Er kann insbesondere durch das Verfahren zur Herstellung des refraktiven optischen Bauelements beeinflusst, insbesondere bestimmt sein.

Bei dem optischen Bauelement handelt es sich insbesondere um eine Linse, insbesondere für die Herstellung eines Brillenglases. Es kann sich auch um ein aus einer derartigen Linse hergestelltes Brillenglas handeln.

Gemäß einem weiteren Aspekt der Erfindung ist der Grundkörper mittels eines additiven Verfahrens hergestellt. Der Grundkörper ist insbesondere mittels eines dreidimensionalen Druckverfahrens hergestellt.

Bei einem additiven Verfahren wird, im Gegensatz zu einem spanenden Verfahren, Material sukzessive hinzugefügt, insbesondere auf einem Träger oder einen bereits hergestellten Teil des Grundkörpers aufgetragen.

Der Grundkörper kann insbesondere aus einem oder mehreren Kunststoffen, mineralischen Gläsern oder Quarzen hergestellt sein, insbesondere bestehen.

Dies ermöglicht eine besonders flexible und kostengünstige Herstellung des Grundkörpers.

Gemäß einem weiteren Aspekt der Erfindung ist der Brechzahlverlauf im Grundkörper in allen drei Raumrichtungen moduliert. Der Brechzahlverlauf im Grundkörper kann insbesondere in allen drei Raumrichtungen einen Brechzahlhub von mindestens 0,001 aufweisen.

Dies ermöglicht ein besonderes flexibles Design der optischen Eigenschaften, insbesondere der Abbildungseigenschaften, insbesondere der Brechkraft und/oder der Korrektion von Abbildungsfehlern, des Grundkörpers.

Gemäß einem weiteren Aspekt der Erfindung weist der Brechzahlverlauf ausschließlich eine Modulation in einer Raumrichtung, insbesondere parallel zu einer Hauptrichtung des refraktiven optischen Bauelements, auf. Dies kann auf einen lagenweisen Aufbau, insbesondere eine lagenweise Herstellung, des Grundkörpers zurückzuführen sein. Die Lagen können hierbei gekrümmt ausgebildet sein.

Gemäß einem weiteren Aspekt der Erfindung weist der Grundkörper in Richtung senkrecht zu einer Hauptrichtung eine mindestens fünfmal so große, insbesondere mindestens zehnmal so große Ausdehnung auf wie in Hauptrichtung.

Beim Grundkörper kann es sich insbesondere um ein flächiges Bauelement handeln. Dies ist insbesondere bei der Verwendung des Grundkörpers zur Herstellung eines Brillenglases vorteilhaft. Unter einem flächigen Bauelement sei hierbei insbesondere ein Bauelement verstanden, welches in zwei Raumrichtungen wesentlich größere Ausdehnungen aufweist als in einer dritten, hierzu senkrechten Raumrichtung. Ein flächiges Bauelement weist insbesondere eine Dicke auf, welche deutlich kleiner ist als die dritte Wurzel seines Volumens. Die Dicke des Grundkörpers kann insbesondere kleiner sein als ein Fünftel der dritten Wurzel seines Volumens.

Die Hauptrichtung entspricht insbesondere der Richtung, entlang welcher die Dicke einer Linse, insbesondere die Dicke des Grundkörpers, gemessen wird. Sie steht insbesondere senkrecht auf der Vorderseite und/oder der Rückseite des optischen Bauelements, insbesondere in einem zentralen Bereich desselben. Die Hauptrichtung kann insbesondere mit einer durch das optische Bauelement definierten optischen Achse zusammenfallen.

Als optische Achse sei hierbei insbesondere die Gerade bezeichnet, entlang derer die Brechkraft des optischen Bauelements gemessen wird. Als Dicke des Grundkörpers kann die Erstreckung desselben in Richtung der optischen Achse bezeichnet werden. Als Dicke des Grundkörpers kann auch die maximale Ausdehnung desselben in Richtung parallel zur optischen Achse oder ein Mittelwert dienen.

Gemäß einem weiteren Aspekt der Erfindung fällt die erste Richtung, entlang welcher der Brechzahlverlauf moduliert ist, mit der Hauptrichtung zusammen.

Gemäß einem weiteren Aspekt der Erfindung ist der Brechzahlverlauf entlang der ersten Richtung, insbesondere entlang der Hauptrichtung, quasiperiodisch oder periodisch. Dies erleichtert die Herstellung des Grundkörpers. Dies erlaubt es insbesondere, unterschiedliche Lagen des Grundkörpers mit im Wesentlichen identischen, insbesondere identischen Verfahrensparametern herzustellen.

Unter quasiperiodisch sei hierbei verstanden, dass die Periode um bis zu 10 %, insbesondere bis zu 30 %, insbesondere bis zu 50 % um einen Mittelwert schwanken darf. Bei einem periodischen Verlauf ist die Periode, insbesondere der Abstand zwischen zwei gleichartigen Extrema, insbesondere zwischen zwei Maxima, konstant.

Gemäß einem weiteren Aspekt der Erfindung ist der Grundkörper aus einem oder mehreren Materialien mit einem spannungsoptischen Koeffizienten ungleich Null. Er ist insbesondere aus einem oder mehreren Materialien hergestellt, welche beim Aushärten aus einem flüssigen Zustand eine Volumenänderung vollziehen.

Der spannungsoptische Koeffizient ist ein Parameter, welcher zur Beschreibung der Abhängigkeit der Brechzahl eines Materials von einem mechanischen Spannungsfeld verwendet wird. Für eine Bestimmung des spannungsoptischen Koeffizienten sei auf DIN 52314 verwiesen.

Gemäß einem weiteren Aspekt der Erfindung weist der Grundkörper in Richtung senkrecht zur ersten Richtung, insbesondere in Richtung senkrecht zur Hauptrichtung, eine zumindest bereichsweise homogene beziehungsweise konstante Brechzahl auf. Die Bereiche homogener Brechzahlen können sich in Richtung quer zur Hauptrichtung über eine Ausdehnung, welche mindestens so groß ist wie die Dicke, insbesondere die mittlere Dicke oder die maximale Dicke, des Grundkörpers erstrecken. Sie können sich insbesondere von einem Rand des Grundkörpers zu einem gegenüberliegenden, insbesondere diametral gegenüberliegenden Rand, des Grundkörpers erstrecken. Sie können sich insbesondere über die gesamte Ausdehnung des Grundkörpers quer zur Hauptrichtung, insbesondere senkrecht zur Hauptrichtung, erstrecken. Sie können hierbei jedoch gekrümmte Grenzflächen aufweisen. Insbesondere Bereiche homogener Brechzahl, welche sich über die gesamte Ausdehnung des Grundkörpers quer zur Hauptrichtung erstrecken, werden im Folgenden auch als Lagen oder optische Lagen bezeichnet.

Gemäß einem weiteren Aspekt der Erfindung weist der Grundkörper eine Mehrzahl optischer Lagen auf. Dies ermöglicht eine besonders flexible Herstellung.

Die optischen Lagen können insbesondere durch Ihren Herstellungsprozess definiert sein. Unter einer optischen Lage ist in diesem Fall ein Volumenbereich des Grundkörpers verstanden, welcher in einem einzigen, insbesondere zeitlich zusammenhängenden Aufbringschritt aufgebracht und/oder in einem einzigen Aushärtschritt ausgehärtet wird. Die optischen Lagen können topologisch wegzusammenhängend, insbesondere einfach zusammenhängend ausgebildet sein. Sie können auch wegzusammenhängend, jedoch nicht einfach zusammenhängend ausgebildet sein.

Sie können auch eine Mehrzahl disjunkter, topologisch unzusammenhängender Volumenbereiche aufweisen. Kombinationen von unzusammenhängenden und/oder wegzusammenhängenden und/oder einfach zusammenhängenden Lagen sind ebenso möglich. Unter einer optischen Lage sei insbesondere ein sich in Richtung quer, insbesondere senkrecht zur Hauptrichtung erstreckender Bereich, insbesondere ein wegzusammenhängender Bereich, insbesondere ein einfach zusammenhängender Bereich des Grundkörpers mit homogener beziehungsweise konstanter Brechzahl verstanden. Zwischen zwei aneinander angrenzenden Lagen ist jeweils eine Grenzfläche ausgebildet, an welche der Brechzahlverlauf eine Inhomogenität aufweist. Unter Inhomogenität im Brechzahlverlauf sei verstanden, dass die Brechzahl an dieser Stelle einen Wert aufweist, welcher von der Brechzahl in mindestens einem angrenzenden Bereich abweicht, insbesondere um einen Brechzahlhub von mindestens 0,001. Die Brechzahl kann im Bereich der Grenzfläche zwischen zwei aneinander angrenzenden Lagen ein Extremum, insbesondere ein Maximum oder ein Minimum aufweisen. Die Grenzfläche selbst kann eine Isofläche der Brechzahl darstellen. Es kann jedoch auch innerhalb der Grenzfläche selbst zu Brechzahlschwankungen kommen.

Die optischen Lagen erstrecken sich jeweils quer, insbesondere senkrecht, zur Hauptrichtung.

Die Lagen sind insbesondere derart orientiert, dass die Grenzflächen an die Form der Vorderseite und/oder Rückseite des Grundkörpers angepasst sind. Die Grenzflächen sind insbesondere derart ausgerichtet, dass sie weder auf der Vorderseite noch auf der Rückseite des Grundkörpers enden. Die Lagen werden insbesondere weder durch die Vorderseite noch durch die Rückseite des Grundkörpers abgebrochen. Eine derartige Ausrichtung der Grenzflächen führt zu besonders günstigen Streueigenschaften. Durch eine derartige Ausrichtung der Grenzflächen kann insbesondere eine Ankopplung an die einfallende Welle, insbesondere eine Streuung in Vorwärtsrichtung, verringert, insbesondere vermieden werden.

Gemäß einem weiteren Aspekt der Erfindung weisen die optischen Lagen eine in Richtung senkrecht zur Hauptrichtung variierende Dicke auf. Die optischen Lagen weisen insbesondere eine parallel zur Hauptrichtung gemessene Dicke auf, welche in Richtung senkrecht zur Hauptrichtung variiert.

Erfindungsgemäß wurde erkannt, dass sich hierdurch unerwünschte Streuverluste verringern lassen.

Gemäß einem Aspekt der Erfindung kann die Dicke der optischen Lagen in Abhängigkeit von der Position senkrecht zur Hauptrichtung durch eine zweidimensionale, stetige, insbesondere stetig differenzierbare Funktion beschrieben werden.

Die optischen Lagen können gekrümmt ausgebildet sein. Sie können auch wenigstens eine eben ausgebildete Grenzfläche aufweisen. Sie können allgemein eine beliebige Auswahl aus konvexen, konkaven und ebenen Grenzflächen aufweisen.

Gemäß einem weiteren Aspekt der Erfindung weist der Grundkörper eine Mehrzahl von Lagen auf, welche ein schwachharmonisches oder ein nichtharmonisches Lagengitter bilden. Unter einem Lagengitter sei hierbei ein eindimensionales Brechzahlgitter verstanden. Das Lagengitter weist insbesondere eine harmonische, schwachharmonische oder nichtharmonische Modulation in z-Richtung auf. Eine harmonische Modulation lässt sich durch eine harmonische Funktion (Sinus oder Cosinus) mit einer einzigen Frequenz beschreiben.

Für die Beschreibung einer schwachharmonischen Modulation sind bis zu zehn Frequenzen notwendig. Für die Beschreibung einer nicht-harmonischen Modulation sind mehr als zehn Frequenzen notwendig.

Erfindungsgemäß wurde erkannt, dass die optischen Lagen vorzugsweise derart ausgebildet werden können, dass sie, insbesondere zumindest näherungsweise, ein Bragg-Gitter bilden. Sie können insbesondere ein Bragg-Gitter bilden, das nur eine sehr geringe, insbesondere keine Streuwirkung in Vorwärtsrichtung hat. Die Streuwirkung in Vorwärtsrichtung beträgt insbesondere höchstens 3 %, insbesondere höchstens 2 % und insbesondere höchstens 1 %. Die Streuwirkung in Vorwärtsrichtung umfasst zum einen die sogenannte Kleinwinkelstreuung von bis zu 0,5° um die Richtung eines einfallenden Strahls, zum anderen aber auch den sogenannten Haze, der bis zu 20° von der Richtung des einfallenden Strahls abweicht.

Streuung in Vorwärtsrichtung bedeutet, dass ein Teil des einfallenden Strahls um mehr als 0°, jedoch weniger als 90° abgelenkt wird.

Unter Haze kann hierbei die Lichtmenge in Prozent verstanden werden, die im Mittel um mehr als 2,5° von der Richtung des einfallenden Lichtstrahls abweicht.

Gemäß einem weiteren Aspekt der Erfindung sind mindestens zwei, insbesondere sämtliche der optischen Lagen aus demselben Material. Das optische Bauelement kann jedoch zusätzlich weitere Lagen oder Schichten aufweisen. Derartige Lagen oder Schichten können insbesondere nicht-optische Funktionen aufweisen. Sie können beispielsweise zum Schutz des optischen Bauelements dienen.

Gemäß einer Alternative weist das optische Bauelement zwei, drei oder mehr optische Lagen aus unterschiedlichen Materialien auf.

Gemäß einem weiteren Aspekt der Erfindung beträgt die Anzahl der optischen Lagen mindestens zwei, insbesondere mindestens drei, insbesondere mindestens fünf, insbesondere mindestens zehn, insbesondere mindestens zwanzig, insbesondere mindestens dreißig, insbesondere mindestens fünfzig, insbesondere mindestens hundert, insbesondere mindestens zweihundert, insbesondere mindestens dreihundert. Die Anzahl der optischen Lagen ist üblicherweise kleiner als tausend. Dies ist keine zwingende Randbedingung.

Eine größere Anzahl optischer Lagen ermöglicht eine flexiblere Herstellung des optischen Bauelements. Sie ermöglichen es insbesondere, den Dickenverlauf und damit die Brechkraft des optischen Bauelements im Wesentlichen frei vorzugeben.

Gemäß einem weiteren Aspekt der Erfindung weisen die optischen Lagen jeweils eine maximale Dicke $di_{max}$ von höchstens 1 mm, insbesondere höchstens 500 $\mu$m, insbesondere höchstens 300 $\mu$m, insbesondere höchstens 200 $\mu$m, insbesondere höchstens 100 $\mu$m, insbesondere höchstens 50 $\mu$m, insbesondere höchstens 30 $\mu$m, insbesondere höchstens 20 $\mu$m, insbesondere höchstens 10 $\mu$m auf.

Die maximale Dicke kann hierbei jeweils in Richtung parallel zur Hauptrichtung gemessen werden.

Es wurde erkannt, dass eine geringe Dicke der optischen Lagen zu besonders vorteilhaften optischen Eigenschaften des optischen Bauelements führt. Durch eine Reduzierung der Dicke der optischen Lagen kann insbesondere der streulichtfreie Einfallswinkelbereich vergrößert werden. Der streulichtfreie Einfallswinkelbereich kann insbesondere mindestens 10°, insbesondere mindestens 15° betragen.

Gemäß einem weiteren Aspekt der Erfindung weisen mindestens zwei der optischen Lagen unterschiedliche maximale Dicken $d1_{max}$, $d2_{max}$ auf. Der relative Dickenunterschied kann bis zu 10 %, insbesondere bis zu 20 %, insbesondere bis zu 30 %, insbesondere bis zu 50 %, insbesondere bis zu 100 % betragen. Alternativ hierzu ist es möglich, sämtliche optischen Lagen mit derselben maximalen Dicke $di_{max}$ auszubilden.

Werden Lagen unterschiedlicher Dicken zugelassen, eröffnet dies einen zusätzlichen Freiheitsgrad für die Herstellung des optischen Bauelements. Die Randbedingung, wonach sämtliche optische Lagen dieselbe maximale Dicke $di_{max}$ aufweisen, kann zu einer Vereinfachung der Verfahrenssteuerung des Herstellungsprozesses führen.

Gemäß einem weiteren Aspekt der Erfindung weist mindestens eine der Grenzflächen zwischen zwei aneinander angrenzenden optischen Lagen einen Abstand dv zur Vorderseite und einen Abstand $d_R$ zur Rückseite des optischen Bauelements insbesondere dessen Grundkörpers auf, wobei ein Verhältnis dieser Abstände dv : $d_R$ in Richtung senkrecht zur Hauptrichtung um maximal 30 %, insbesondere maximal 20 %, insbesondere maximal 10 %, insbesondere maximal 5 %, insbesondere maximal 3 %, insbesondere maximal 2 %, insbesondere maximal 1 % variiert. Das Verhältnis ist vorzugsweise konstant.

Vorderseite und Rückseite des Grundkörpers sind hierbei die einfach zusammenhängenden, insbesondere stetig differenzierbaren Oberflächen desselben mit einer Erstreckung quer zur Hauptrichtung.

Vorzugsweise sind sämtliche der Grenzflächen entsprechend ausgerichtet.

Der Abstand der Grenzflächen zur Vorderseite und zur Rückseite des optischen Bauelements wird hierbei insbesondere in Richtung parallel zur Hauptrichtung gemessen.

Es hat sich gezeigt, dass eine derartige Ausbildung der optischen Lagen zu besonders vorteilhaften optischen Eigenschaften führt. Hierdurch kann insbesondere vermieden werden, dass es im Bereich der Vorderseite und/oder der Rückseite des optischen Bauelements zu Brechzahlinhomogenitäten kommt. Hierdurch lassen sich insbesondere die Erzeugung von Streulicht verringern, insbesondere vermeiden.

Gemäß einem weiteren Aspekt der Erfindung weisen die optischen Lagen in ihrem Inneren jeweils eine konstante Brechzahl auf. Sie weisen in ihrem Inneren insbesondere homogene, d. h. konstante, optische Eigenschaften auf. Inhomogenitäten, d. h. Variationen, ergeben sich insbesondere ausschließlich im Bereich der Grenzflächen zwischen zwei aneinander angrenzenden Lagen.

Gemäß einem weiteren Aspekt der Erfindung weisen benachbarte Grenzflächen zwischen aneinander angrenzenden Lagen Abstände auf, die in Hauptrichtung um maximal 30 %, insbesondere maximal 20 %, insbesondere maximal 10 %, insbesondere maximal 5 %, insbesondere maximal 3 %, insbesondere maximal 2 %, insbesondere maximal 1 % variieren. Die Abstände zwischen aneinander angrenzenden Lagen sind vorzugsweise konstant. Sie bilden insbesondere eine quasi-periodische, oder eine periodische Abfolge.

Hierdurch wird die Erzeugung von Streulicht verringert, insbesondere vermieden.

Hierbei werden die Abstände, insbesondere ausgehend von einem Startpunkt auf der Vorder- oder Rückseite des optischen Bauelements, in Richtung parallel zur Hauptrichtung gemessen.

Die Periodizität der Lagen verläuft insbesondere parallel zur Hauptrichtung.

Gemäß einem weiteren Aspekt der Erfindung weist das optische Bauelement mindestens eine zusätzliche Schicht auf, welche aus einem anderen Material ist als die optischen Lagen. Die zusätzliche Schicht erstreckt sich insbesondere über die gesamte Ausdehnung des optischen Bauelements in Richtung senkrecht zur Hauptrichtung. Bei der zusätzlichen Schicht kann es sich insbesondere um einen Träger handeln. Als zusätzliche Schicht kann insbesondere eine Hartschicht, insbesondere eine transparente Hartschicht, dienen. Eine transparente Hartschicht umfasst dabei eine dünne Lackschicht, die wiederum auf einen Träger, z.B. eine Linse aus Kunststoff, aufgebracht wird und ebendiese Linse damit gegen äußere Einflüsse wie z.B. Verkratzen unempfindlicher macht. Als zusätzliche Schicht kann auch eine Beschichtung, beispielsweise eine Antireflex-Beschichtung, dienen. Des weiteren kann als zusätzliche Schicht eine Schicht dienen, die die Reinigbarkeit der Gläser verbessert, z.B. aus einem hydrophoben Material.

Eine weitere Aufgabe der Erfindung besteht darin, ein Brillenglas zu verbessern. Diese Aufgabe wird durch ein Brillenglas mit einem optischen Bauelement gemäß der vorhergehenden Beschreibung gelöst. Die Vorteile ergeben sich aus denen des optischen Bauelements.

Das Brillenglas weist insbesondere besonders günstige Streueigenschaften auf. Bis zum maximalen Einfallswinkel $\vartheta_{max}$ ist es insbesondere frei von streulichtgenerierenden Bereichen.

Ein entsprechendes Brillenglas ist insbesondere sehr flexibel herstellbar. Das optische Design des Brillenglases ist insbesondere sehr frei vorgebbar. Insbesondere die Brechkraft/oder Korrekturwirkungen des Brillenglases, beispielsweise zur Korrektur eines Astigmatismus, lassen sich im Wesentlichen frei vorgegeben. Es ist insbesondere auch möglich, das Brillenglas als Mehrstärkenglas, insbesondere als Bifokalglas, Trifokalglas, insbesondere als Gleitsichtglas, auszubilden. Das Brillenglas kann insbesondere als Freiformglas ausgebildet sein. Es kann individuell an ein Auge eines Benutzers angepasst werden. Das optische Design kann mit Hilfe eines computerunterstützten Verfahrens berechnet werden.

Gemäß einem Aspekt der Erfindung handelt es sich um ein Gleitsichtglas.

Gemäß einem weiteren Aspekt der Erfindung weist das Brillenglas eine zusätzliche Beschichtung auf. Bei der Beschichtung kann es sich insbesondere um eine funktionale Beschichtung, beispielsweise um eine Antireflex-Beschichtung und/oder eine Tönung und/oder eine Beschichtung zum Ausfiltern eines bestimmten Wellenlängenbereichs handeln.

Eine weitere Aufgabe der Erfindung besteht darin, ein Verfahren zur Herstellung eines optischen Bauelements zu verbessern.

Diese Aufgabe wird durch ein Verfahren gelöst, bei welchem Baudaten des herzustellenden Grundkörpers bereitgestellt werden und der Grundkörper durch sukzessives Aufbringen von Material auf einen Träger gemäß der bereitgestellten Baudaten hergestellt wird.

Die Baudaten des herzustellenden Grundkörpers können insbesondere individuell, insbesondere durch Vermessung der Augen eines Benutzers, ermittelt werden. Zur Ermittlung der Baudaten des Grundkörpers kann insbesondere ein computerunterstütztes Verfahren, insbesondere eine sogenannte Lens Design-Software (LDS; Linsen-Design-Software), dienen.

Der Brechzahlverlauf im Grundkörper, insbesondere dessen dreidimensionale Fouriertransformierte, weist dabei gerade die vorgehend beschriebenen Eigenschaften auf.

Die Vorteile ergeben sich aus den bereits beschriebenen.

Das Verfahren umfasst insbesondere ein additives Fertigungsverfahren, insbesondere ein 3D-Druckverfahren.

Gemäß einem Aspekt der Erfindung wird das Material tröpfchenweise aufgebracht. Hierbei kann insbesondere die Größe, das heißt das Volumen der einzelnen Tröpfchen und/oder deren Aufbringdichte und/oder deren Material in Abhängigkeit von den Baudaten variiert werden. Die genannten Parameter, insbesondere die Tröpfchengröße und/oder deren Aufbringdichte kann insbesondere innerhalb einer einzigen Lage variiert werden.

Dies ermöglicht eine besonders flexible, gezielte Ausbildung des Grundkörpers, insbesondere der optischen Lagen, insbesondere deren Dickenverlauf.

Gemäß einem weiteren Aspekt der Erfindung dient als Träger ein optisches Bauelement, insbesondere ein transparentes Bauelement. Als Träger kann insbesondere eine Hartschicht oder Antireflexschicht oder eine hydrophobe Schicht oder eine Linse dienen.

Gemäß einem weiteren Aspekt der Erfindung wird das Material lagenweise auf den Träger aufgebracht. Das Material wird insbesondere in wegzusammenhängenden, jedoch nicht einfach zusammenhängenden oder in einfach zusammenhängenden Volumenbereichen auf den Träger aufgebracht. Es kann auch gleichzeitig in mehreren unzusammenhängenden Volumenbereichen auf den Träger aufgebracht werden.

Dies ermöglicht einerseits eine besonders einfache Aufbringung des Materials. Andererseits können hierdurch die optischen Eigenschaften des Grundkörpers besonders gut kontrolliert werden.

Gemäß einem Aspekt der Erfindung werden die Lagen jeweils vor dem Auftrag der nächsten Lage zumindest teilweise, insbesondere vollständig, ausgehärtet. Sie können insbesondere mittels elektromagnetischer Strahlung, insbesondere mittels UV-Licht, ausgehärtet werden. Sie können auch durch Erwärmung ausgehärtet werden. Dies ermöglicht ein besonders gleichmäßiges, homogenes Aushärten der Lagen.

Gemäß einem weiteren Aspekt der Erfindung werden innerhalb einer optischen Lage die Größe der Tröpfchen und/oder deren Dichte variiert. Die Änderung der Tröpfchengröße folgt vorzugsweise aus der gewünschten Schichtdickenänderung. Eine Änderung der Schichtdicke um 1 % kann beispielsweise durch eine Änderung des Tröpfchenvolumens um $1,01^3 = 1,03030$, das heißt eine Änderung des Tröpfchenvolumens um etwa 3 % erreicht werden.

Hierdurch kann auf einfache Weise der Dickenverlauf der Lagen beeinflusst werden.

Das Material zur Herstellung der optischen Lagen weist beim Auftragen derselben insbesondere eine Viskosität von weniger als 10 mPas, insbesondere weniger als 5 mPas, insbesondere weniger als 3 mPas, insbesondere weniger als 2 mPas, insbesondere weniger als 1 mPas auf. Diese Angaben beziehen sich auf Raumtemperatur, insbesondere 20°C.

Mittels des beschriebenen Verfahrens lässt sich auf besonders einfache Weise sehr flexibel ein optisch hochwertiges Brillenglas herstellen.

Ein weiterer Aspekt der Erfindung betrifft ein entsprechend hergestelltes Brillenglas.

Ein weiterer Aspekt der Erfindung betrifft ein Computerprogrammprodukt zur Durchführung des vorhergehend beschriebenen Verfahrens. Das Computerprogrammprodukt ermöglicht es, mittels bereitgestellter Baudaten eines Grundkörpers, ein Gerät zur additiven Herstellung desselben derart zu steuern, dass der Grundkörper einen vorgegebenen Brechzahlverlauf mit einer vorgegebenen Fouriertransformierten aufweist.

Mittels des Computerprogrammprodukts kann ein Gerät zur additiven Herstellung des Grundkörpers insbesondere derart gesteuert werden, dass der Grundkörper gerade die vorhergehend beschriebenen Eigenschaften aufweist.

Mittels des Computerprogrammprodukts lässt sich insbesondere die Anzahl und/oder Größe und/oder Aufbringdichte und/oder der zeitliche Verlauf des Aufbringens und/oder des Aushärtens der aufzubringenden Volumenbereiche, insbesondere der aufzubringenden Materialtröpfchen steuern.

Ein weiterer Aspekt der Erfindung betrifft einen Datenträger mit Baudaten eines Brillenglases gemäß der vorhergehenden Beschreibung.

Mit Hilfe der auf dem Datenträger abgespeicherten Baudaten lassen sich insbesondere ein Gerät und/oder ein Verfahren zur Herstellung eines entsprechenden Brillenglases steuern.

Die Baudaten können insbesondere auf einer CD-ROM oder einem USB-Speichergerät abgespeichert sein.

Ein weiterer Aspekt der Erfindung betrifft ein Gerät zur additiven Herstellung eines Grundkörpers.

Das Gerät ist derart steuerbar, dass es mittels bereitgestellter Baudaten des Grundkörpers einem Grundkörper mit einem vorgegebenen Brechzahlverlauf und einer Fouriertransformierten desselben herstellen kann.

Das Gerät umfasst insbesondere einen 3D-Drucker. Es weist insbesondere eine steuerbare Auftrags-Einrichtung auf, mittels welcher Größe und/oder Aufbringdichte und/oder zeitliche Parameter des Aufbringens von Material zur Herstellung des Grundkörpers steuerbar sind.

Eine weitere Aufgabe der Erfindung besteht darin, ein Brillenglas zu verbessern.

Zur Lösung dieser Aufgabe umfasst ein Brillenglas einen Grundkörper, welcher z.B. mittels eines 3D-Druckverfahrens, lagenweise hergestellt ist und einen entlang wenigstens einer quer zu den jeweiligen Lagen verlaufenden ersten Richtung modulierten Brechzahlverlauf (n = n(x,y,z)) mit einem Brechzahlhub von z.B. mehr als 0,001 aufweist, wobei der Brechzahlverlauf im Grundkörper eine dreidimensionale Fouriertransformierte aufweist, welche durch einen Modulationsvektor f = (f$_x$, f$_y$, f$_z$) charakterisiert ist, für den gilt:

$$\left| \frac{4 \times 10^6}{m} \frac{f_z}{|f|^2} - 1 \right| \leq u_{max}$$

und

$$\left| \frac{4 \times 10^6}{m} \frac{f_z \cos \vartheta_{max} + \sqrt{f_x^2 + f_y^2} \sin \vartheta_{max}}{|f|^2} - 1 \right| \leq u_{max}$$

mit u$_{max}$ ≤ 0,5, insbesondere u$_{max}$ ≤ 0,3, insbesondere u$_{max}$ ≤ 0,2, insbesondere u$_{max}$ ≤ 0,1, insbesondere u$_{max}$ ≤ 0,05, insbesondere u$_{max}$ ≤ 0,03, insbesondere u$_{max}$ ≤ 0,02, und insbesondere u$_{max}$ ≤ 0,01.

Weitere Details des Brillenglases sowie Vorteile desselben ergeben sich aus der vorhergehenden Beschreibung.

Eine weitere Aufgabe der Erfindung besteht darin, ein entsprechendes Verfahren zum Herstellen eines Brillenglases bereitzustellen.

Das erfindungsgemäße Verfahren zum Herstellen eines Brillenglases umfasst ein lagenweises Erzeugen eines Grundkörpers z.B. mit Hilfe eines 3D-Druckprozesses, wobei die Lagen des Grundkörpers in einer ersten Richtung derart angeordnet werden, dass der Grundkörper einen entlang wenigstens der ersten Richtung modulierten Brechzahlverlauf n(x, y, z) aufweist und das lageweise Erzeugen des Grundkörpers mit der Maßgabe erfolgt, dass eine dreidimensionale Fouriertransformierte ñ(f$_x$, f$_y$, f$_z$) des Brechzahlverlaufs n(x, y, z) in einem kartesischen Koordinatensystem x, x, z durch einen Modulationsvektor f = (f$_x$, f$_y$, f$_z$) bestimmt ist, für den für einen vorgegebenen maximalen Einfallswinkel $\vartheta_{max}$ ≤ 90° gilt:

$$\left| \frac{4 \times 10^6}{m} \frac{f_z}{|f|^2} - 1 \right| \leq u_{max}$$

und

$$\left| \frac{4 \times 10^6}{m} \frac{f_z \cos \vartheta_{max} + \sqrt{f_x^2 + f_y^2} \sin \vartheta_{max}}{|f|^2} - 1 \right| \leq u_{max},$$

mit u$_{max}$ ≤ 0,5.

Zur technischen Umsetzung mit Hilfe eines 3D-Druckprozesses kann z.B. die Größe der flüssigen Kunststoff-Tröpfchen im lagenweisen Druckprozess in lateraler Richtung geeignet individuell variiert werden. Dadurch kann die Dicke einer einzelnen Lage während des Auftrags beliebig verändert werden. Alternativ kann die Schreibdichte oder die relative Position der Tröpfchen zueinander geeignet verändert werden.

Diese Alternativen sind nur Beispiele. Es sind auch andere technische Umsetzungen möglich, deren gemeinsame Eigenschaft darin besteht, den Schreibprozess beim Auftrag einer einzelnen Lage so zu adaptieren, dass eine Lage mit variabler Dicke in den Raumrichtungen entsteht.

Eine andere Aufgabe der Erfindung besteht darin, eine entsprechende Vorrichtung zum Herstellen eines Brillenglases bereitzustellen.

Die erfindungsgemäße Vorrichtung zum Herstellen eines Brillenglases umfasst eine Einrichtung zum lagenweisen Erzeugen eines Grundkörpers und einen Computer, der eingerichtet ist, die Einrichtung auf Basis von in dem Computer gespeicherten Fertigungsdaten zum lagenweisen Erzeugen des Grundkörpers derart anzusteuern, dass die Lagen des Grundkörpers in einer ersten Richtung derart angeordnet werden, dass der Grundkörper einen entlang wenigstens der ersten Richtung modulierten Brechzahlverlauf $n = n(x,y,z)$ aufweist. Die Vorrichtung ist dadurch gekennzeichnet, dass das lagenweise Erzeugen des Grundkörpers mit der Maßgabe erfolgt, dass eine dreidimensionale Fouriertransformierte $\tilde{n}(f_x, f_y, f_z)$ des Brechzahlverlaufs $n(x, y, z)$ in einem kartesischen Koordinatensystem mit den Koordinaten $x$, $y$ und $z$ durch einen Modulationsvektor $f = (f_x, f_y, f_z)$ bestimmt ist, für den für einen vorgegebenen maximalen Einfallswinkel $\vartheta_{max} \leq 90°$ gilt:

$$\left| \frac{4 \times 10^6}{m} \frac{f_z}{|f|^2} - 1 \right| \leq u_{max}$$

und

$$\left| \frac{4 \times 10^6}{m} \frac{f_z \cos \vartheta_{max} + \sqrt{f_x^2 + f_y^2} \sin \vartheta_{max}}{|f|^2} - 1 \right| \leq u_{max},$$

mit $u_{max} \leq 0,5$.

Ein entsprechender computerlesbarer Datenträger umfasst Fertigungsdaten, auf Basis derer ein Brillenglas der vorstehend beschriebenen Art mit einem vorstehend beschriebenen Verfahren herstellbar ist, wenn die Fertigungsdaten von dem Computer der o.a. Vorrichtung ausgelesen werden.

Weitere Details und Vorteile der Erfindung ergeben sich aus der Beschreibung von Ausführungsbeispielen anhand der Figuren. Es zeigen:

Fig. 1    schematisch einen Querschnitt durch ein optisches Bauelement mit mehreren Lagen,

Fig. 2    eine Darstellung gemäß Fig. 1 eines optischen Bauelements mit einer anderen geometrischen Ausbildung und

Fig. 3    eine Darstellung gemäß Fig. 1 eines optischen Bauelements mit einer anderen geometrischen Ausbildung.

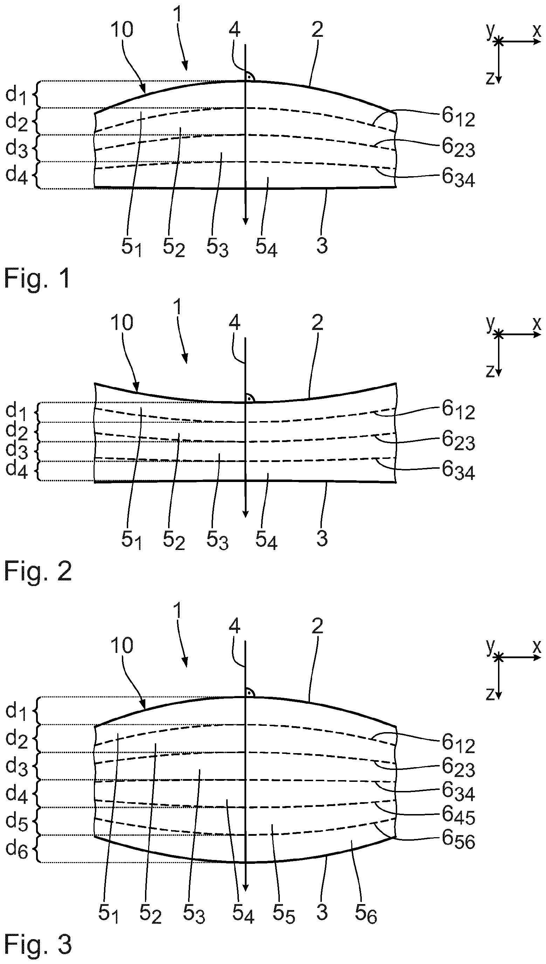

Im Folgenden werden unter Bezugnahme auf die Figuren 1 bis 3 unterschiedliche Varianten eines optischen Bauelements 1 beschrieben.

Bei dem optischen Bauelement 1 handelt es sich insbesondere um eine Linse. Es handelt sich insbesondere um ein transparentes optisches Bauelement.

In der Figur 1 ist exemplarisch und schematisch eine Plankonvexlinse, in der Figur 2 eine Plankonkavlinse und in der Figur 3 eine Bi-Konvexlinse dargestellt. Die Erfindung ist nicht auf die in den Figuren dargestellten Formen beschränkt. Andere Formen sind ebenso möglich. Bei der Linse kann es sich um eine sphärische, eine asphärische oder eine Freiformlinse handeln.

Allgemein weist das optische Bauelement 1, einen Grundkörper 10 mit einer Vorderseite 2 und eine Rückseite 3 auf. Die Vorderseite 2 und die Rückseite 3 erstrecken sich quer zu einer Hauptrichtung 4. Die Hauptrichtung 4 entspricht insbesondere der Strahlrichtung senkrecht auf das optische Bauelement 1 einfallenden Lichtes. Sie entspricht insbesondere der optischen Achse des optischen Bauelements 1.

Das optische Bauelement 1 umfasst eine Mehrzahl von optischen Lagen $5_i$. Die in den Figuren dargestellte Anzahl n der optischen Lagen $5_i$ ist exemplarisch zu verstehen. Die Anzahl n der optischen Lagen $5_i$ beträgt mindestens zwei. Sie kann auch wesentlich größer sein. Sie kann insbesondere mehr als 100 betragen. Beispielsweise kann ein 2 mm dickes Brillenglas etwa 200 optische Lagen aufweisen.

Die optischen Lagen $5_i$ erstrecken sich jeweils quer zur Hauptrichtung 4. Sie können gekrümmt ausgebildet sein.

Sie weisen insbesondere eine in Richtung senkrecht zur Hauptrichtung 4 variierende Dicke di auf. Beispielsweise ist die Dicke di der optischen Lagen 5i beim optischen Bauelement 1 gemäß Figur 1 im Mittenbereich größer als im Randbereich. Beim optischen Bauelement 1 gemäß Figur 2 ist die Dicke di der optischen Lagen $5_i$ im Mittenbereich geringer als im Randbereich.

Der Verlauf der optischen Lagen $5_i$, das heißt der Verlauf der Schichtstruktur des optischen Bauelements 1, ist insbesondere an die Form der Vorderseite 2 und/oder der Rückseite 3 angepasst ausgebildet.

Zwischen jeweils zwei aneinander angrenzenden Lagen $5_i$, $5_j$ ist jeweils eine Grenzfläche 6ij ausgebildet. Die Grenzflächen $6_j$ sind in den Figuren durch gestrichelte Linien dargestellt.

An den Grenzflächen 6ij weist ein Brechzahlverlauf jeweils eine Inhomogenität, insbesondere in Form eines Maximums oder eines Minimums, auf.

Im Übrigen sind die optischen Lagen $5_i$ vorzugsweise homogen ausgebildet. Sie weisen insbesondere in ihrem Inneren homogene optische Eigenschaften auf. Sie weisen insbesondere quer zur Hauptrichtung 4 eine einheitliche, das heißt eine homogene beziehungsweise konstante Brechzahl auf.

Die Grenzflächen $6_{ij}$ sind insbesondere derart ausgebildet, dass sie einen möglichst gleichmäßigen Übergang von der Form der Vorderseite 2 zur Form der Rückseite 3 bilden.

Die optischen Lagen $5_i$ sind insbesondere derart ausgebildet, dass sie entlang einer parallel zur Hauptrichtung 4 verlaufenden Geraden den Abstand zwischen der Vorderseite 2 und der Rückseite 3 des optischen Bauelements 1 äquidistant aufteilen. Vorzugsweise gilt dies für jede beliebige, parallel zur Hauptrichtung 4 durch das optische Bauelement 1 verlaufende Gerade.

Der Verlauf der Grenzflächen $6_{ij}$ ist insbesondere an den Verlauf der Vorderseite 2 und/oder der Rückseite 3 angepasst. Er ist insbesondere sukzessive an die Geometrie der Vorderseite 2 und die Geometrie der Rückseite 3 angepasst.

Beim Durchgang durch das optische Bauelement 1 in Richtung parallel zur Hauptrichtung 4 ist somit eine zumindest näherungsweise periodische, insbesondere eine periodische Abfolge, der Brechzahlinhomogenität feststellbar. Die maximale Periode dieser Abfolge ist vorzugsweise kleiner als 1 mm, insbesondere kleiner als 500 $\mu$m, insbesondere kleiner als 300 $\mu$m, insbesondere kleiner als 200 $\mu$m, insbesondere kleiner als 100 $\mu$m, insbesondere kleiner als 50 $\mu$m, insbesondere kleiner als 30 $\mu$m, insbesondere kleiner als 20 $\mu$m, insbesondere kleiner als 10 $\mu$m.

Diese Werte gelten entsprechend für eine maximale Dicke $di_{max}$ der optischen Lagen $5_i$.

Im Folgenden werden Details des Verfahrens zur Herstellung des optischen Bauelements 1 beschrieben.

Das optische Bauelement 1 wird in einem additiven Fertigungsverfahren, insbesondere in einem 3D-Druckverfahren, hergestellt. Hierbei wird Material insbesondere auf einen Träger aufgetragen. Das Material wird sukzessive gemäß bereitgestellter Baudaten des Grundkörpers aufgebracht.

Das Material wird insbesondere lagenweise aufgebracht. Die optischen Lagen $5_i$ werden insbesondere sukzessive aufgebracht, das heißt eine optische Lage $5_j$ mit j > i wird erst nach dem Aufbringen der optischen Lage $5_i$ aufgebracht.

Es ist auch möglich, mit dem Aufbringen einer Lage $5_{i+1}$ zu beginnen, bevor die vorhergehende Lage $5_i$ vollständig aufgebracht ist.

Die optischen Lagen $5_i$ werden insbesondere in flüssigem Zustand aufgetragen.

Es ist vorgesehen, die optischen Lagen $5_i$ tröpfchenweise aufzutragen.

Nach dem Auftragen der optischen Lagen $5_i$ werden die optischen Lagen $5_i$ teilweise oder ganz ausgehärtet.

Zur Aushärtung der optischen Lagen $5_i$ kann eine Bestrahlung mittels UV-Lichtes und/oder eine Wärmebehandlung vorgesehen sein.

Laterale Materialinhomogenitäten innerhalb ein und derselben optischen Lage $5_i$ können beispielsweise durch eine Vermischung der flüssigen Tröpfchen nach dem Auftragen, jedoch vor deren Aushärtung, minimiert werden.

Als Material für die optischen Lagen $5_i$ dient insbesondere ein Kunststoff oder ein mineralisches Glas mit einem spannungsoptischen Koeffizienten ≠ 0. Da es beim Aushärten der optischen Lagen $5_i$ zu einer Volumenänderung, insbesondere zu einem isotropen Schrumpfen des Materials, kommen kann, führt dies im Bereich der Grenzflächen $6_{ij}$ zu mechanischen Spannungen, die zu den bereits erwähnten Brechzahlinhomogenitäten führen.

Wie bereits erwähnt, ist es vorgesehen, die Dicke di der optischen Lagen $5_i$ über deren Erstreckung quer zur Hauptrichtung 4 zu variieren. Hierfür kann die Größe, insbesondere das Volumen der aufgetragenen Tröpfchen, beim Auftragen in lateraler Richtung variiert werden. Es ist auch möglich, die Dichte der aufgetragenen Tröpfchen, insbesondere deren relative Position zueinander, über die Erstreckung des optischen Bauelements 1 in Querrichtung zu variieren. Hierdurch lassen sich die optischen Lagen $5_i$ mit einer variablen Dicke di sehr flexibel herstellen.

Der Durchmesser der Tröpfchen beim Auftragen ist insbesondere höchstens so groß wie die maximale Dicke $di_{max}$ der jeweils herzustellenden Lage $5_i$.

Der Durchmesser und/oder die Aufbringdichte der Tröpfchen kann innerhalb einer einzigen Lage variieren.

Bei dem verfahrensgemäß hergestellten optischen Bauelement 1 handelt es sich insbesondere um eine optische Komponente zur Herstellung eines Brillenglases, insbesondere eines Gleitsichtglases.

Die optische Komponente kann weiteren Bearbeitungsschritten unterzogen werden. Es ist auch möglich, das Brillenglas direkt mit Hilfe des vorhergehend beschriebenen Verfahrens herzustellen.

Auf das optische Bauelement 1 kann außerdem eine Beschichtung aufgebracht werden. Das Brillenglas kann insbesondere eine zusätzliche, funktionale Beschichtung, insbesondere eine Antireflex-Beschichtung, aufweisen.

Zur Herstellung des Grundkörpers 10 wird insbesondere ein Gerät zur additiven Herstellung des Grundkörpers 10 bereitgestellt. Das Gerät ist mittels bereitgestellter Baudaten des Grundkörpers 10 steuerbar. Es ist insbesondere derart steuerbar, dass der Grundkörper einen vorgegebenen Brechzahlverlauf mit einer vorgegebenen Fouriertransformierten aufweist.

Das Gerät ist insbesondere mittels eines Computerprogrammprodukts steuerbar. Das Computerprogrammprodukt kann das Gerät zur additiven Herstellung des Grundkörpers 10 mithilfe der bereitgestellten Baudaten des Grundkörpers 10 steuern.

Als Baudaten können die konkreten optischen und/oder geometrischen Daten des herzustellenden Grundkörpers 10 dienen. Als Baudaten können insbesondere eine konkrete Brechzahlverteilung und deren Fouriertransformierte vorgegeben werden.

Alternativ oder zusätzlich ist es auch möglich, die Baudaten aus den Rezeptdaten für ein herzustellendes Brillenglas zu ermitteln. Diese Ermittlung kann vom Computerprogrammprodukt des Geräts zur additiven Herstellung des Grundkörpers 10 durchgeführt werden. Sie kann auch mittels eines weiteren, separaten Computerprogrammprodukts, insbesondere einer CD-ROM oder einer DVD mit sogenannter Lens Design-Software (LDS; Linsendesign-Software), durchgeführt werden. Es ist insbesondere möglich, aus den Rezeptdaten für ein Brillenglas die Baudaten des Grundkörpers 10, insbesondere den Brechzahlverlauf des Grundkörpers 10, sowie Steuerparameter zur Steuerung des Materialauftrags mit Hilfe des Geräts zur additiven Herstellung des Grundkörpers 10 zu berechnen.

Es ist auch möglich, dass zur Herstellung des Grundkörpers 10, insbesondere des daraus herzustellenden Brillenglases, Messdaten zur Charakterisierung der Fehlsichtigkeit eines Nutzers ermittelt und an eine separate Recheneinheit übermittelt werden. Mittels der separaten Recheneinheit können aus den gemessenen Werten zur Charakterisierung der Fehlsichtigkeit Baudaten des Grundkörpers 10 zur Kompensation der Fehlsichtigkeit ermittelt werden. Diese können dann als Computerprogrammprodukt zur Steuerung eines Geräts zur additiven Herstellung des Grundkörpers 10 zur Verfügung gestellt werden.

Mittels des Geräts zur additiven Herstellung des Grundkörpers 10 ist auf besonders einfache Weise, sehr flexibel der Grundkörper 10 und das daraus hergestellte Brillenglas herstellbar.

**Patentansprüche**

1. Refraktives optisches Bauelement (1) mit

    1.1 einem Grundkörper (10),
    1.2 wobei der Grundkörper (10) einen entlang wenigstens einer ersten Richtung modulierten Brechzahlverlauf (n = n(x, y, z)) aufweist mit

        1.2.1 einer Anzahl von Extrema im Bereich von 2 bis 1000,
        1.2.2 einem maximalen mittleren Abstand zwischen benachbarten Maxima und/oder zwischen benachbarten Minima von höchstens 1 mm und 1.2.3 einem Brechzahlhub $\Delta n > 0{,}001$,
        **dadurch gekennzeichnet, dass**

    1.3 eine dreidimensionale Fouriertransformierte $\tilde{n}(f_x, f_y, f_z)$ des Brechzahlverlaufs ($n(x, y, z)$) in einem kartesischen Koordinatensystem ($x, x, z$) durch einen Modulationsvektor ($f = (f_x, f_y, f_z)$) bestimmt ist, für den für einen vorgegebenen maximalen Einfallswinkel $\vartheta_{max} \leq 90°$ gilt:

$$1.3.1 \qquad \left| \frac{4 \, x \, 10^6}{m} \frac{f_z}{|f|^2} - 1 \right| \leq u_{max}$$

und

$$1.3.2 \qquad \left| \frac{4 \, x \, 10^6}{m} \frac{f_z \cos \vartheta_{max} + \sqrt{f_x^2 + f_y^2} \sin \vartheta_{max}}{|f|^2} - 1 \right| \leq u_{max},$$

mit $u_{max} \leq 0{,}5$.

2.  Refraktives optisches Bauelement (1) gemäß Anspruch 1, **dadurch gekennzeichnet, dass** der Grundkörper (10) mittels eines additiven Verfahrens hergestellt ist.

3.  Refraktives optisches Bauelement (1) gemäß einem der vorhergehenden Ansprüche, **dadurch gekennzeichnet, dass** der Brechzahlverlauf (n = n(x, y, z)) im Grundkörper (10) in allen drei Raumrichtungen (x, y, z) moduliert ist und jeweils einen Brechzahlhub $\Delta n > 0{,}001$ aufweist.

4.  Refraktives optische Bauelement (1) gemäß einem der vorhergehenden Ansprüche, **dadurch gekennzeichnet, dass** der Grundkörper (10) in Richtung senkrecht zu einer Hauptrichtung (4) eine mindestens fünfmal so große Ausdehnung aufweist wie in Hauptrichtung (4).

5.  Refraktives optische Bauelement (1) gemäß einem der vorhergehenden Ansprüche, **dadurch gekennzeichnet, dass** der Brechzahlverlauf (n = n(x, y, z)) entlang der ersten Richtung quasiperiodisch oder periodisch ist.

6.  Refraktives optisches Bauelement (1) gemäß einem der vorgehenden Ansprüche, **dadurch gekennzeichnet, dass** der Grundkörper eine Mehrzahl von Lagen ($5_i$) aufweist, welche eine in Richtung senkrecht zur Hauptrichtung (4) variierende Dicke (dimax) aufweisen, wobei der Brechzahlverlauf (n = n(x, y, z)) an einer Grenzfläche ($6_{ij}$) zwischen zwei aneinander angrenzenden Lagen (5i, 5j) jeweils eine Inhomogenität aufweist.

7.  Refraktives optische Bauelement (1) gemäß Anspruch 6, **dadurch gekennzeichnet, dass** mindestens eine Grenzfläche ($6_{ij}$) zwischen zwei aneinander angrenzenden Lagen ($5_i$, $5_j$) in einer Hauptrichtung (4) einen Abstand dv zu einer Vorderseite (2) und einen Abstand $d_R$ zu einer Rückseite (3) des Grundkörpers (10) aufweist, wobei ein Verhältnis dieser Abstände dv : $d_R$ über die Ausdehnung des Grundkörpers in Richtung quer zur Hauptrichtung (4) um höchstens 30 % variiert.

8.  Refraktives optische Bauelement gemäß einem der Ansprüche 6 bis 7, **dadurch gekennzeichnet, dass** ausgehend von einem beliebigen Punkt auf einer Vorderseite (2) des Grundkörpers (10) eine Abfolge benachbarter Grenzflächen ($6_{ij}$, $6_{jj}$+1) in Hauptrichtung Abstände aufweisen, welche um höchstens 30 % variieren.

9.  Brillenglas hergestellt aus einem refraktiven optischen Bauelement gemäß einem der vorhergehenden Ansprüche.

10. Verfahren zur Herstellung eines refraktiven optischen Bauelements (1) umfassend die folgenden Schritte:

    10.1 Bereitstellen eines Geräts zur additiven Herstellung eines Grundkörpers (10) aus einem transparenten Material,

    10.2 Bereitstellen von Baudaten des herzustellenden Grundkörpers (10), welcher einen entlang wenigstens einer ersten Richtung modulierten Brechzahlverlauf (n = n(x, y, z)) aufweist mit einer Anzahl von Extrema im Bereich von 2 bis 1000, einem maximalen mittleren Abstand zwischen benachbarten Maxima und/oder zwischen benachbarten Minima von höchstens 1 mm und einem Brechzahlhub, wobei eine eine dreidimensionale Fouriertransformierte $\tilde{n}(f_x, f_y, f_z)$ des Brechzahlverlaufs (n(x, y, z)) in einem kartesischen Koordinatensystem (x, x, z) durch einen Modulationsvektor (f = ($f_x$, $f_y$, $f_z$)) bestimmt ist, für den für einen vorgegebenen maximalen Einfallswinkel $\vartheta_{max} \leq 90°$ gilt:

$$\left| \frac{4\,x\,10^6}{m} \frac{f_z}{|f|^2} - 1 \right| \leq u_{max}$$

und

$$\left| \frac{4\,x\,10^6}{m} \frac{f_z \cos \vartheta_{max} + \sqrt{f_x^2 + f_y^2}\, \sin \vartheta_{max}}{|f|^2} - 1 \right| \leq u_{max},$$

mit $u_{max} \leq 0{,}5$.

10.3 Bereitstellen eines Trägers,
10.4 sukzessives Aufbringen von Material auf den Träger gemäß der bereitgestellten Baudaten.

**11.** Computerprogrammprodukt zur Durchführung des Verfahrens gemäß Anspruch 10, **dadurch gekennzeichnet, dass** es mittels bereitgestellter Baudaten eines Grundkörpers (10) ein Gerät zur additiven Herstellung desselben derart steuern kann, dass der Grundkörper (10) einen Brechzahlverlauf (n = (n(x, y, z)) mit einer Fouriertransformierten $\tilde{n}(f_x, f_y, f_z)$ aufweist, für deren Modulationsvektor (f=$(f_x, f_y, f_z)$) für einen vorgegebenen maximalen Einfallswinkel $\vartheta_{max} \leq 90°$ gilt:

$$\left| \frac{4 \, x \, 10^6}{m} \frac{f_z}{|f|^2} - 1 \right| \leq u_{max}$$

und

$$\left| \frac{4 \, x \, 10^6}{m} \frac{f_z \cos \vartheta_{max} + \sqrt{f_x^2 + f_y^2} \sin \vartheta_{max}}{|f|^2} - 1 \right| \leq u_{max},$$

mit $u_{max} \leq 0{,}5$.

**12.** Auf einem Datenträger abgespeicherte Baudaten eines Brillenglases gemäß Anspruch 9.

**13.** Gerät zur additiven Herstellung eines Grundkörpers (10) eines optischen Bauelements (1), **dadurch gekennzeichnet, dass** es mittels bereitgestellter Baudaten eines Grundkörpers (10) derart steuerbar ist, dass ein Grundkörper (10) mit einem vorgegebenen Brechzahlverlauf (n = (n(x, y, z)) und einer Fouriertransformierten $\tilde{n}(f_x, f_y, f_z)$ desselben herstellbar ist, wobei für einen Modulationsvektor (f=$(f_x, f_y, f_z)$) für einen vorgegebenen maximalen Einfallswinkel $\vartheta_{max} \leq 90°$ gilt:

$$\left| \frac{4 \, x \, 10^6}{m} \frac{f_z}{|f|^2} - 1 \right| \leq u_{max}$$

und

$$\left| \frac{4 \, x \, 10^6}{m} \frac{f_z \cos \vartheta_{max} + \sqrt{f_x^2 + f_y^2} \sin \vartheta_{max}}{|f|^2} - 1 \right| \leq u_{max},$$

mit $u_{max} \leq 0{,}5$.

**14.** Brillenglas (1) mit

14.1 einem lagenweise in einer ersten Richtung (z) erzeugten oder gebildeten Grundkörper (10),
14.2 wobei der Grundkörper (10) einen entlang wenigstens der ersten Richtung modulierten Brechzahlverlauf (n = n(x,y,z)) aufweist,
14.3 **dadurch gekennzeichnet, dass** eine dreidimensionale Fouriertransformierte $\tilde{n}(f_x, f_y, f_z)$ des Brechzahlverlaufs (n(x, y, z)) in einem kartesischen Koordinatensystem (x, y, z) durch einen Modulationsvektor (f = $(f_x, f_y, f_z)$) bestimmt ist, für den für einen vorgegebenen maximalen Einfallswinkel $\vartheta_{max} \leq 90°$ gilt:

14.3.1

$$\left| \frac{4 \, x \, 10^6}{m} \frac{f_z}{|f|^2} - 1 \right| \leq u_{max}$$

und
14.3.2

$$\left| \frac{4 \, x \, 10^6}{m} \frac{f_z \cos \vartheta_{max} + \sqrt{f_x^2 + f_y^2} \sin \vartheta_{max}}{|f|^2} - 1 \right| \leq u_{max},$$

mit $u_{max} \leq 0{,}5$.

**15.** Verfahren zum Herstellen eines Brillenglases (1) mit den Schritten

15.1 lagenweises Erzeugen eines Grundkörpers (10),

15.2 wobei die Lagen des Grundkörpers (10) in einer ersten Richtung (z) derart angeordnet werden, dass der Grundkörper (10) einen entlang wenigstens der ersten Richtung modulierten Brechzahlverlauf (n = n(x,y,z)) aufweist,

15.3 **dadurch gekennzeichnet, dass** das lageweise Erzeugen des Grundkörpers (10) mit der Maßgabe erfolgt, dass eine dreidimensionale Fouriertransformierte $\tilde{n}(f_x, f_y, f_z)$ des Brechzahlverlaufs (n(x, y, z)) in einem kartesischen Koordinatensystem (x, y, z) durch einen Modulationsvektor (f = ($f_x$, $f_y$, $f_z$)) bestimmt ist, für den für einen vorgegebenen maximalen Einfallswinkel $\vartheta_{max} \leq 90°$ gilt:

15.3.1

$$\left| \frac{4 \, x \, 10^6}{m} \frac{f_z}{|f|^2} - 1 \right| \leq u_{max}$$

und
15.3.2

$$\left| \frac{4 \, x \, 10^6}{m} \frac{f_z \cos \vartheta_{max} + \sqrt{f_x^2 + f_y^2} \sin \vartheta_{max}}{|f|^2} - 1 \right| \leq u_{max},$$

mit $u_{max} \leq 0{,}5$.

**16.** Vorrichtung zum Herstellen eines Brillenglases mit

16.1 einer Einrichtung zum lagenweisen Erzeugen eines Grundkörpers (10),

16.2 mit einem Computer, der eingerichtet ist, die Einrichtung auf Basis von in dem Computer gespeicherten Fertigungsdaten zum lagenweisen Erzeugen des Grundkörpers (10) derart anzusteuern, dass die Lagen des Grundkörpers (10) in einer ersten Richtung (z) derart angeordnet werden, dass der Grundkörper (10) einen entlang wenigstens der ersten Richtung modulierten Brechzahlverlauf (n = n(x,y,z)) aufweist,

16.3 **dadurch gekennzeichnet, dass** das lageweise Erzeugen des Grundkörpers (10) mit der Maßgabe erfolgt, dass eine dreidimensionale Fouriertransformierte $\tilde{n}(f_x, f_y, f_z)$ des Brechzahlverlaufs (n(x, y, z)) in einem kartesischen Koordinatensystem (x, y, z) durch einen Modulationsvektor (f = ($f_x$, $f_y$, $f_z$)) bestimmt ist, für den für einen vorgegebenen maximalen Einfallswinkel $\vartheta_{max} \leq 90°$ gilt:

16.3.1

$$\left| \frac{4 \times 10^6}{m} \frac{f_z}{|f|^2} - 1 \right| \leq u_{max}$$

und
16.3.2

$$\left| \frac{4 \times 10^6}{m} \frac{f_z \cos \vartheta_{max} + \sqrt{f_x^2 + f_y^2} \sin \vartheta_{max}}{|f|^2} - 1 \right| \leq u_{max},$$

mit $u_{max} \leq 0{,}5$.

17. Computerlesbarer Datenträger umfassend Fertigungsdaten, auf Basis derer ein Brillenglas (1) nach Anspruch 14 mit einem Verfahren nach Anspruch 15 herstellbar ist, wenn die Fertigungsdaten von dem Computer der Vorrichtung nach Anspruch 16 ausgelesen werden.

Fig. 1

Fig. 2

Fig. 3

Europäisches Patentamt

European Patent Office

Office européen des brevets

# EUROPÄISCHER RECHERCHENBERICHT

Nummer der Anmeldung

EP 19 15 7212

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | ZHANG YING ET AL: "An improved transmitting multi-layer thin-film filter", CHINESE PHYSICS B, CHINESE PHYSICS B, BRISTOL GB, Bd. 24, Nr. 5, 30. April 2015 (2015-04-30) , Seite 54212, XP020284301, ISSN: 1674-1056, DOI: 10.1088/1674-1056/24/5/054212 [gefunden am 2015-04-30] * Abschnitt 2.1 - 2.2 * * Abbildung 1 * * Tabelle 1 * * Abbildungen 1,2,5 * ----- | 1-17 | INV. G02B1/11 B29D11/00 G02C7/06 |
| X | M. PETERS ET AL: "Design of photonic structures for the enhancement of the light guiding efficiency of fluorescent concentrators", PROCEEDINGS SPIE 7513, 2009 INTERNATIONAL CONFERENCE ON OPTICAL INSTRUMENTS AND TECHNOLOGY, Bd. 7002, 25. April 2008 (2008-04-25), Seite 70020V, XP055608032, 1000 20th St. Bellingham WA 98225-6705 USA ISSN: 0277-786X, DOI: 10.1117/12.781087 ISBN: 978-1-5106-2781-9 * Abschnitt 1.2; Abbildungen 4,6,7 * ----- -/-- | 1-17 | |
| | | | RECHERCHIERTE SACHGEBIETE (IPC) |
| | | | G02B B29D G02C |

Der vorliegende Recherchenbericht wurde für alle Patentansprüche erstellt

| Recherchenort | Abschlußdatum der Recherche | Prüfer |
|---|---|---|
| München | 24. Juli 2019 | von Hentig, Roger |

EPO FORM 1503 03.82 (P04C03)

Seite 1 von 2

Europäisches
Patentamt

European
Patent Office

Office européen
des brevets

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | IMENES A G ET AL: "FLAT-TOPPED BROADBAND RUGATE FILTERS", APPLIED OPTICS, OPTICAL SOCIETY OF AMERICA, WASHINGTON, DC; US, Bd. 45, Nr. 30, 20. Oktober 2006 (2006-10-20), Seiten 7841-7850, XP001500070, ISSN: 0003-6935, DOI: 10.1364/AO.45.007841 * Abschnitte 2. - 4. * * Abbildungen 1-5 *     ----- | 1-7 | |
| A | WO 2015/092014 A1 (LUXEXCEL HOLDING BV [NL]) 25. Juni 2015 (2015-06-25) * Seite 3, letzter Absatz - Seite 4, Absatz 2 *     ----- | 1-17 | |

**RECHERCHIERTE SACHGEBIETE (IPC)**

Der vorliegende Recherchenbericht wurde für alle Patentansprüche erstellt

| Recherchenort | Abschlußdatum der Recherche | Prüfer |
|---|---|---|
| München | 24. Juli 2019 | von Hentig, Roger |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
..............................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 19 15 7212

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

24-07-2019

| Im Recherchenbericht angeführtes Patentdokument | Datum der Veröffentlichung | Mitglied(er) der Patentfamilie | Datum der Veröffentlichung |
|---|---|---|---|
| WO 2015092014 A1 | 25-06-2015 | EP 3084499 A1 | 26-10-2016 |
| | | WO 2015092014 A1 | 25-06-2015 |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2015092016 A1
- US 20050046957 A1
- WO 2016188930 A1
- EP 0341998 A1
- WO 2008051578 A2
- WO 2008051592 A2
- DE 102009004377 B4
- DE 102009004379 B4
- DE 102009004380 B4